Europäisches Patentamt

European Patent Office

Office européen des brevets

(19)

(11) Publication number: **0 235 106 B1**

## EUROPEAN PATENT SPECIFICATION

(12)

(45) Date of publication of patent specification: 31.07.91    (51) Int. Cl.⁵: **A22C** 21/00, B65G 47/86

(21) Application number: 87850055.2

(22) Date of filing: 16.02.87

(54) Automatic transfer apparatus.

(30) Priority: 18.02.86 AU 4661/86

(43) Date of publication of application:
02.09.87 Bulletin 87/36

(45) Publication of the grant of the patent:
31.07.91 Bulletin 91/31

(84) Designated Contracting States:
AT BE CH DE ES FR GB GR IT LI LU NL SE

(56) References cited:
EP-A- 0 095 809    EP-A- 0 155 014
FR-A- 2 496 065    FR-A- 2 563 699
US-A- 2 949 996    US-A- 3 643 293
US-A- 3 766 602    US-A- 4 178 659
US-A- 4 199 288    US-A- 4 574 428

(73) Proprietor: **Lindholst & Co. (Australia) Pty.
Limited
49 Prince William Drive
Seven Hills New South Wales 2147(AU)**

(72) Inventor: **Chapman, Gregory Allan
25 Hillcrest Avenue
Epping, New South Wales, 2121(AU)**

(74) Representative: **Roth, Ernst Adolf Michael et
al
GÖTEBORGS PATENTBYRA AB Box 5005
S-402 21 Göteborg(SE)**

## Description

FIELD OF THE INVENTION

This invention relates to apparatus for use in processing poultry, and in particular to an apparatus for use in poultry processing plants. The invention relates to an apparatus for transferring slaughtered birds or carcasses from a first conveyor to another spaced apart conveyor or from one position to another position.

DESCRIPTION OF THE BACKGROUND ART

In the processing of birds or poultry, such as for example chickens, ducks, turkeys and the like, it has long been known to suspend birds in a head downward position, by slotting their feet into shackles of an overhead conveyor such as an overhead chain conveyor. Such a conveyor moves the birds through a number of stations, such as for example, a stunning station, a killing station, a bleeding station, a scalding station, a defeathering station, and finally, a dehocking station where the legs of the slaughtered birds are severed at the knee joint (for example, by means of a rotating hock cutter). Such a hock cutting operation results in the birds (now without lower legs) falling onto a table, chute or conveyor belt for eventual rehanging on a further spaced apart conveyor, such as for subsequent eviscerating.

There have been a number of disadvantages with such processes, including the cross-contamination of carcasses as they lay heaped on a table awaiting rehanging and the chance of repetitive strain injury to operators who have to lift the birds and force them into shackles in an eviscerating conveyor. This latter disadvantage is particularly apparent with some large birds, such as large turkeys, which may weigh 20 kg or more. In addition, the cost for such processes have been high as they are labor intensive. These processes have also often been inefficient.

Health and hygiene laws in many countries now require separate conveyor systems to be used for slaughtering and eviscerating.

It is known to provide arrangements which transfer birds or carcasses from one conveyor to another, but such arrangements only allow for the passing of a bird or carcass from one conveyor to another at substantially equal spacings. That is, equal spacings from one bird to another.

It has been found that such arrangements are not always appropriate and in particular, they are not always appropriate for the requirements of the operators. For example, it may be the case that shackles attached to a conveyor can be spaced one from another (and thus, the attached birds spaced from one another) by varying spacings, such as for example, 4 inches, 6 inches, 8 inches, 12 inches, or the like. The optimum spacing is determined not only by the size of the bird, but also by purpose. For example, in the case of chickens, an 8 inch spacing between carcasses may be advantageous and appropriate when the bird is being killed and defeathered, while a spacing of only 6 inches may be required and appropriate when the bird is going through an eviscerating process. In the case of a larger bird, such as a turkey, an initial spacing appropriate for killing and defeathering may be from approximately 10 inches to 12 inches. An appropriate spacing for the eviscerating of the turkey, however, may only be approximately 8 inches.

A previous attempt has been made to overcome the disadvantages found with prior art arrangements, and such an attempt is disclosed in European patent specification EP A 0 225 306 which constitutes a state of the art according to Article 5413). The arrangement of this European patent specification does not however disclose the arrangement of the present invention, which has been found to be particularly useful in operation and has been found to provide straight-forward and efficient means for transferring poultry carcasses from one conveyor to another spaced apart conveyor. The invention subject of the present application as defined in the claims of the specification are not disclosed in the prior European patent specification No EP A 0 225 306, although the prior specification is an attempt to overcome the disadvantages that have been found to exist in prior arrangements up until this time.

Thus, while known arrangements allow for the transfer of birds, or carcasses from one conveyor to another at substantially the same or regular spacings, there is clearly a need to provide an arrangement which allows for the birds or carcasses to be transferred from one conveyor (where they are at one particular spacing) to a spaced apart conveyor (where they are at spacings different from the first conveyor). It may also be desired to transfer birds from, for example, an eviscerating conveyor to a conveyor leading to a chilling chamber, in a manner such that the spacings will differ from one conveyor to another. Also, the spacings required may vary depending upon the nature and size of the bird concerned.

SUMMARY OF THE INVENTION

The above and other disadvantages are overcome, according to the present invention, by a transfer apparatus for transferring poultry or carcasses between spaced apart conveyor having different shackle spacings.

Yet, another object of the present invention is transferring of poultry or carcasses from an eviscerating conveyor to a chilling or air-cooling conveyor.

According to one aspect of this invention there is provided a transfer arrangement for transferring poultry carcasses from one conveyor to another spaced apart conveyor, comprising: a rotatably mounted plate; means being provided for rotating the plate, such that the plate is rotatable about a rotational axis; a plurality of sector members being provided and each being pivotally mounted at a common pivot-point relative to the plate, whereby the common pivot-point is spaced apart and offset from said rotational axis of said plate; a plurality of substantially equidistantly spaced apart upstanding pins being provided about the periphery of the plate; each of the sector members being provided with an elongated slot therein; the slot of each of said sector members interacting and engaging with one of said pins, whereby each of said pins is associated with a slot of a sector member; said pins being adapted to move in said slots upon rotation of said plate to thereby impart at least a rotational movement to said sector members and to allow each of said sector members to pivot about the pivotal mountings thereof.

## BRIEF DESCRIPTION OF THE DRAWINGS

The present invention will become more fully understood from the detailed description given hereinbelow and the accompanying drawings which are given by way of illustration only, and thus are not limitative of the present invention, and wherein:

FIG. 1 is a schematic top plan view of an apparatus according to the present invention;

FIG. 2 is a corresponding side evaluation;

FIGS. 3, 4 and 5 show, in greater detail, aspects of the transfer arrangement of the present invention.

## DETAILED DESCRIPTION OF THE PREFERRED EMBODIMENTS

As referred to hereinbelow, the invention has application to transferring birds or carcasss from one conveyor to another, the invention having application to any appropriate bird or carcass. For the purposes of description and definition, however, such birds and carcasses will be referred to by way of example, as poultry carcasses.

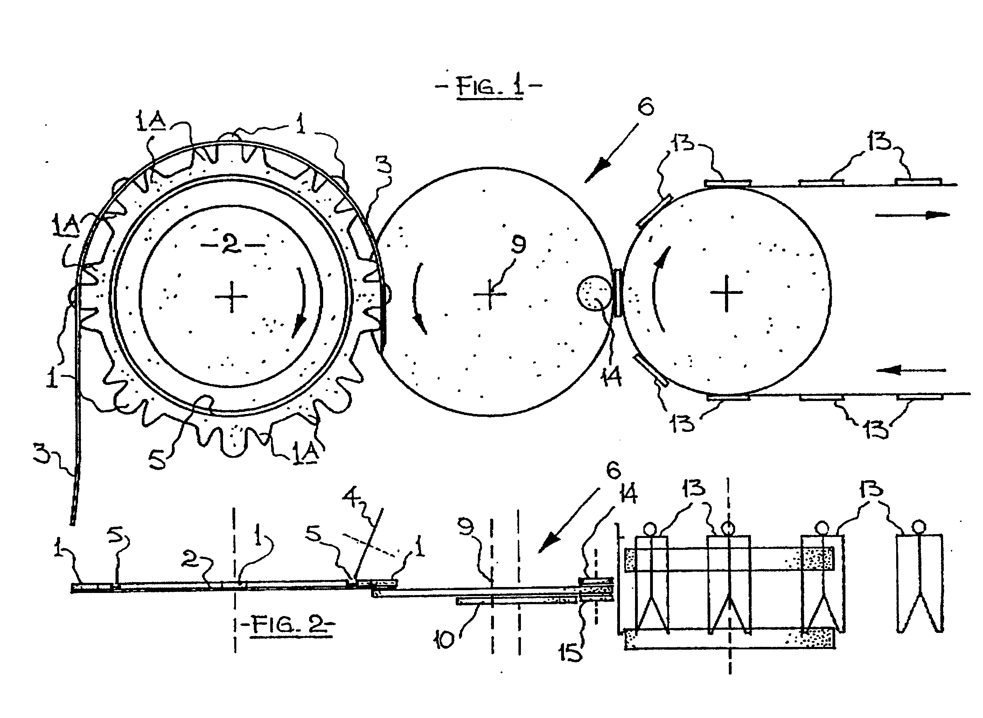

Referring firstly to FIG. 1 of the accompanying drawings, poultry carcasses which have already been slaughtered and defeathered are conveyed by an overhead conveyor chain to the transfer apparatus of the present invention. The poultry carcasses which are hung by their legs, are hung in shackles, a rotary hock cutter 2 being provided which will cut and remove the hooks of the carcasses.

Ancillary lugs 1A between lugs I prevent displacement of the legs of the carcasses. Guide members 3, such as a tubular guide, will allow the carcasses and legs to be guided into a hock cutting position while the guide members 3, preferably provided above and below the hock cutter 2, will bend and angle the legs of the carcasses at the joint between the lower leg and the drumstick, so as to present the joint accurately to, for example, a blade 4 which severs the leg at the joint. This blade can be driven by any appropriate prime mover, such as an electric motor. Preferably, the blade 4 coacts with a substantially annular cutting groove 5 provided in the hock cutter 2.

When the legs have been severed, the poultry carcass is freed from the shackles of the killing conveyor and falls away from the conveyor and from the guide members 3.

The knuckles of the poultry carcass are, however, engaged with notches provided in the periphery of a transfer arrangement 6 of the present invention which is adjacent to but spaced apart from the first killing conveyor. The poultry carcasses then fall away from and are disengaged following the action of the hock cutter 2. The carcasses will disengage from the guide members 3 in such a way that remaining knuckles of the poultry carcass will engage with peripheral notches or recesses provided in the transfer arrangement 6.

The guide members 3 are so formed and positioned about the operational perimeter of the hock cutter 2 and are of such a length that the poultry carcass is retained and held in position until a transfer point is reached where it can be transferred in a straight-forward manner to the transfer arrangement 6 of the present invention. The knuckles will then engage the aforesaid peripheral recesses which will be further described hereinafter.

Referring now to the transfer arrangement 6, this arrangement preferably includes a rotatably mounted plate 10, preferably of a substantially circular configuration. In the preferred form of the invention, the plate 10 is adapted to rotate about a substantially vertical axis, such as about a substantially central pivot point 10A. Motor means and, if necessary, associated gearing is provided to impart a rotational moment to the plate 10.

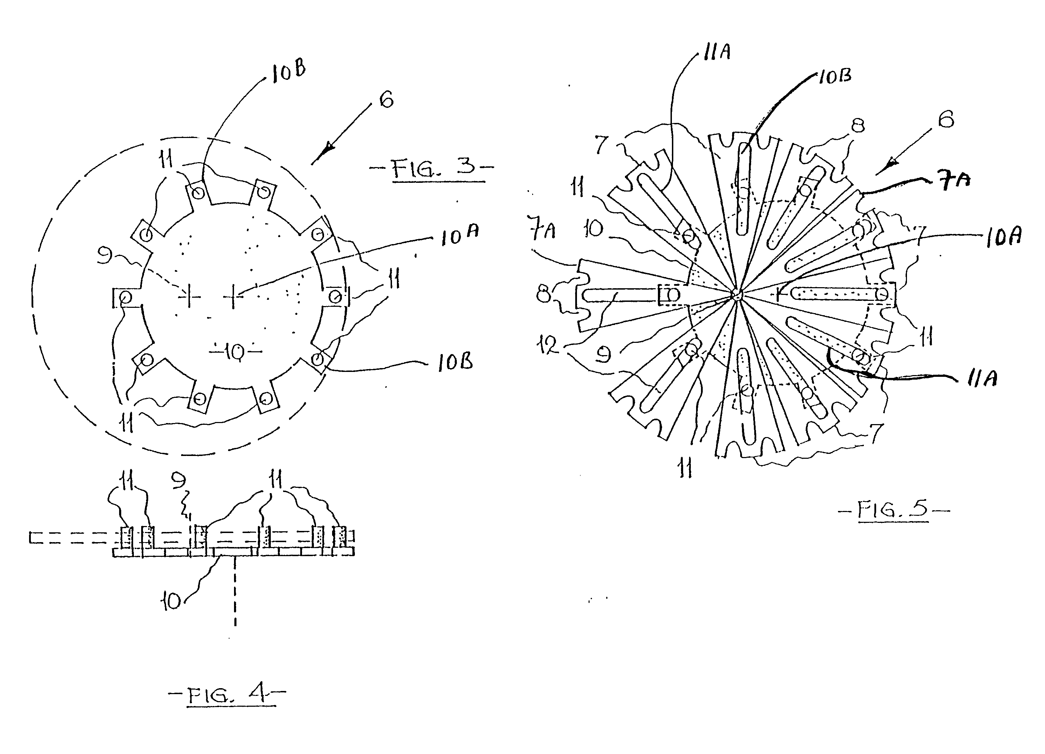

The plate 10, as shown in the accompanying drawings, is preferably provided with a plurality of substantially equidistantly spaced-apart pins 11, each one being slidable in a longitudinal slot 12 of a sector member 7 to be described below. The pins 11 are preferably circumferentially spaced apart about the periphery of the plate 10. The pins 11 extend upwardly from the upper surface of the plate 10 and, as shown in FIGS 3 and 5, are in one form of the invention located on radially extending lugs 10B which extend outwardly from the circumferential periphery of the plate 10.

The present invention also includes a plurality of sector members 7, each of which is provided with a pair of notches 8, which conform to the spacing between suspension points on the shackles as seen in FIG. 5. Each sector member 7 is of a generally elongated triangular configuration and which are pivotally mounted at their apices to a pivot point 9 on the table 10.

The sector members 7 are provided with elongated slots or grooves 11A therein, and the sectors 7 are pivotally mounted or attached to the plate 10 so that each groove 11A fits over or engages an upstanding pin 11.

The sector members 7 are attached or pivotally mounted to the plate 10 at a position spaced apart and offset from the substantially central rotational mounting of the plate 10. Base end portions 7A of the sector members 7 are preferably provided with or profiled to incorporate one or more of the recesses or notches 8 to house and accommodate knuckles and leg portions of poultry carcasses as they come away from, or are released from the hock cutter 2.

In operation, therefore, and on a rotational moment being applied to the plate 10, this plate 10 rotates, and the location of the pins 11 within the grooves or slots 11A of the sector members 7 will cause a rotational moment to be imparted from the table 10 to the sector members 7. The sector memers 7 will, therefore, rotate with the plate 10 and will also pivot relative to each other about the pivot point 9.

As will be appreciated particularly from FIG. 5 of the accompanying drawings, the spacing between the sector members will vary and alter as the table 10 and thus, the sector members 7 rotate.

It should be appreciated that the distance by which the spacing between the sector members 7 can vary from one position to a spaced apart position substantially corresponds to the distance between the rotational mounting point 10A of the plate and the pivotal mounting point 9 of sectors 7. Variation of this distance can also vary the distance by which the sector members can be spaced one from the other. The mounting hereinbefore referred to, also allows for spacing to vary from one position to a further spaced apart position, wherein, in a first circumferential position, the sector members 7 are spaced apart, for example, at 8 inch centers to a second spaced apart circumferential position, for example, where the sector members 7 are spaced apart by 6 inches. Such an arrangement allows for poultry carcasses to be taken from a killing conveyor at approximately 8 inch centers (at one circumferential position of the transfer arrangement) and, on rotation of the plate 10 and sectors 7, to be delivered to a spaced apart eviscerating conveyor located at a further spaced apart circumferential position, at approximately 6 inch centers. It should be recognised that these differing centers are by way of example only. This will be apparent from the accompanying drawings and in particular, FIG. 4 of the accompanying drawings.

It will be appreciated from the above that the transfer arrangement 6 forms a table which has the ability to transfer poultry carcasses from one position wherein the carcasses are at a certain spacing one from the other to a further spaced apart position in which the carcasses are at a different spacing one from the other. The present invention allows this to take place in a straight-forward and efficient manner.

Referring further to the accompanying drawings, and with particular reference to FIGS 1, 2, 3 and 4 thereof, an arrangement is shown whereby the transfer arrangement 6 serves to transfer poultry carcasses from a first conveyor and hock cutter, to a second conveyor including a plurality of spaced apart shackles 13 for conveying the carcass for eviscerating.

As the sector members 7 of the transfer arrangement rotate, they engage with carcasses from the first killing conveyor and hock cutter 2, rotating the poultry carcasses at first spacings to the eviscerating conveyor 20 which includes a plurality of shackles 13, spaced apart at differing predetermined spacing or centers. At the position at which it is desired to transfer the poultry carcasses from the transfer arrangement 6 to an eviscerating conveyor 20, means are provided which may bear on a knuckle of a leg of the carcass, at the point where it protrudes to gently ease it out of a notch or reces 8 of a sector member 7 and onto a eviserating shackle 13. In one form of the present invention as particularly shown in FIG. 1 and 2 of the accompanying drawings, a pressure wheel 14 is rotatably mounted and bears upon the knuckle to gently ease it out of its notch and into a suspension point on an eviscerating shackle 13 aligned with the notch. The pressure wheel 14 is rotatably mounted above and spaced apart from the sector members 7. If desired, a further or second pressure wheel 15 can be located beneath the sector members 7 and transfer arrangement 6, so as to exert additional pressure on the drumstick of the poultry carcass to assist in firmly engaging the carcass with the eviscerating shackle 13.

It will be appreciated from the above and the accompanying drawings that the poultry carcasses, once transferred onto the eviscerating conveyor, may be conveyed for eviscerating and further processing, packaging, and the like.

It should also be appreciated that the invention has been described by way of example only, with reference to the transfer of poultry carcasses from the killing and defeathering conveyor to an eviscerating conveyor. It should be appreciated that the invention can be used for transferring poultry carcasses from one conveyor to another, no matter what the purpose of the conveyor. It will be particularly appreciated from the foregoing that the invention provides a transfer arrangement which allows for poultry carcasses to be transferred from one position at certain centers or spacings, to a spaced apart position where they can be loaded onto or attached to a further conveyor at different centers of spacings.

If desired, the invention can be used to transfer poultry carcasses from one line to a plurality of different other lines or conveyors.

The invention being thus described, it will be obvious that the same may be varied in many ways. Such variations are not to be regarded as a departure from the scope of the invention as defined in the claims.

## Claims

1. A transfer arrangement for transferring poultry carcasses from one conveyor to another spaced apart conveyor, comprising: a rotatably mounted plate (10); means being provided for rotating said plate (10) about a rotational axis (10A); a plurality of sector members (7), each being pivotally mounted at a common pivot-point (9) relative to said plate (10), whereby said common pivot-point (9) is spaced apart and offset from said rotational axis (10A) of said plate (10); a plurality of substantially equidistantly spaced apart, upstanding pins (11) being provided about the periphery of said plate (10); each of said sector members (7) being provided with an elongate slot (11A) therein, the slot (11A) of each sector member (7) interacting with one of said pins (11), wherein each of said pins (11) is associated with a slot (11A) of a sector member (7); said pins (11) being adapted to move in said slots (11A) upon rotation of said plate (10), to thereby impart at least a rotational movement to said sector members (7) and to allow each of said sector members (7) to pivot about the pivotal mountings thereof.

2. A transfer arrangement as claimed in claim 1, wherein each of said sector members (7) is of a substantially elongate triangular configuration, having apices thereof pivotally mounted to said plate (10) at said common pivotpoint (9); the triangular configuration of each of said sector members (7) having a base end (7A); each of said base ends (7A) being provided with notches (8) therein, such as to accommodate portions of said poultry carcasses (3).

3. A transfer arrangement as claimed in claim 1, wherein the plate (10) is substantially circular in formation and is provided with a plurality of substantially equidistantly spaced apart radially extending lugs (10B) spaced circumferentially therearound, each of said lugs (10B) mounting an upstanding pin (11).

4. A transfer arrangement as claimed in claim 1, wherein the pins (11) are mounted on radially extending lugs (10B) spaced about the circumference of said plate (10).

5. A transfer arrangement as claimed in claim 1, further comprising pressure means (14), for acting on portions of said poultry carcasses, to assist in locating a carcass in one or more shackles (13) provided on at least one eviscerating conveyor (20); said pressure means (14) being provided adjacent a position where the poultry carcasses are transferred from said sector members (7), to said one or more shackles (13) on said at least one eviscerating conveyor (20).

## Revendications

1. Dispositif de transfert pour transférer des carcasses de volaille d'un convoyeur à un autre convoyeur distinct, comprenant une plaque (10) montée rotative; des moyens étant prévus pour entraîner en rotation, ladite plaque (10) autour d'un axe de rotation (10A); une pluralité de secteurs (7), chacun étant monté à pivotement sur un point-pivot commun (9) par rapport à ladite plaque (10), de façon que le point-pivot commun (9) soit distinct et décalé latéralement de l'axe de rotation (10A) de la plaque (10); une pluralité de broches verticales (11), espacées et sensiblement équidistantes les unes des autres, étant prévue sur la périphérie de la plaque (10); chaque secteur (7) étant pourvu d'une fente allongée (11A), la fente (11A) de chaque secteur (7) coopérant avec une des broches (11), caractérisé en ce que chaque broche (11) est associée à une fente (11A) d'un secteur (7), lesdites broches (11) étant adaptées pour se mouvoir dans lesdites pentes (11A) lors de la rotation de ladite plaque (10), de manière à imprimer aux secteurs (7) au moins un mouvement de rotation et à permettre à chacun des secteurs (7) de pivoter sur leurs organes de pivotement.

**2.** Dispositif de transfert selon la revendication 1, dans lequel chacun des secteurs (7) est sensiblement de configuration triangulaire allongée, le sommet des secteurs étant monté pivotant sur la plaque (10) sur le point-pivot commun (9), la configuration triangulaire de chacun des secteurs (7) comportant une base d'extrémité (7A), chaque base d'extrémité (7A) étant pourvue d'entailles (8) de manière à correspondre aux parties des carcasses de volailles.

**3.** Dispositif de transfert selon la revendication 1, dans lequel la plaque (10) est sensiblement circulaire et comporte une pluralité de pattes (10B) s'étendant radialement et espacées sensiblement de façon équidistante les unes des autres sur la périphérie de ladite plaque, chacune des pattes (10B) recevant une broche verticale (11).

**4.** Dispositif de transfert selon la revendication 1, dans lequel les broches (11) sont montées sur les pattes (10B) s'étendant radialement et à une certaine distance de la périphérie de ladite plaque (10).

**5.** Dispositif de transfert selon la revendication 1, comprenant, en outre, des moyens de pression (14) pour agir sur les parties de carcasses de volaille et aider au positionnement d'une carcasse dans une ou davantage manilles (13) prévues sur au moins l'un des convoyeurs d'eviscération (20), lesdits moyens de pression étant prévus adjacents à une position dans laquelle les carcasses de volaille sont transférées des secteurs (7) à une ou davantage manilles (13) d'au moins un des convoyeurs d'eviscération (20).

## Patentansprüche

**1.** Transportvorrichtung für den Transport von Geflügelkadavern von einer Fördereinrichtung zu einer anderen, in einem Abstand angeordneten Fördereinrichtung, die umfaßt: eine drehbar angebrachte Platte (10); Mittel, um die Platte (10) in Drehung um eine Drehachse (10A) zu versetzen; eine Vielzahl von Sektorgliedern (7), die jeweils an einem gemeinsamen Drehgelenk (9) gelenkig zur Platte (10) befestigt sind, wobei das gemeinsame Drehgelenk (9) in einem Abstand und versetzt zur Drehachse (10A) der Platte (10) angeordnet ist; eine Vielzahl von im wesentlichen in gleichen Abständen angeordneten aufrechtstehenden Stiften (11) am Umkreis der Platte (10); jedes der Sektorglieder (7) ist mit einem Längsschlitz (11A) versehen, und der Schlitz (11A) jedes Sektorgliedes (7) wirkt mit einem der Stifte (11) zusammen, wobei jeder der Stifte (11) einem Schlitz (11A) eines Sektorgliedes (7) zugeordnet ist; die Stifte (11) sind so gestaltet, daß sie sich bei Drehung der Platte (10) in den Schlitzen (11A) bewegen, um damit den Sektorgliedern (7) mindestens eine Drehbewegung zu verleihen, damit jedes der Sektorglieder (7) sich um seine Gelenkbefestigung bewegen kann.

**2.** Transportvorrichtung entsprechend Anspruch 1, gekennzeichnet dadurch, daß jedes der Sektorglieder (7) im wesentlichen die Form eines länglichen Dreiecks hat, dessen Spitze gelenkig an der Platte (10) am gemeinsamen Drehgelenk (9) befestigt ist; die Dreiecksform jedes der Sektorglieders (7) besitzt eine Basisseite (7A); jede der Basisseiten (7A) ist mit Einkerbungen (8) zur Aufnahme von Teilen der Geflügelkadaver (3) versehen.

**3.** Transportvorrichtung entsprechend Anspruch 1, gekennzeichnet dadurch, daß die Platte (10) im wesentlichen kreisrund und mit einer Vielzahl von im wesentlichen im gleichen Abstand angeordneten, radial herausgeführten Nasen (10B) versehen ist, die an ihren Umfang vorgesehen sind, wobei jede der Nasen (10B) einen aufrechtstehenden Stift (11) trägt.

**4.** Transportvorrichtung entsprechend Anspruch 1, gekennzeichnet dadurch, daß die Stifte (11) auf den radial herausgeführten Nasen (10B) angebracht sind, die in Abständen am Umfang der Platte (10) vorgesehen sind.

**5.** Transportvorrichtung entsprechend Anspruch 1, die außerdem druckausübende, auf Teile der Geflügelkadaver wirkende Mittel (14) enthält, die dazu beitragen, einen Kadaver in einem oder mehreren Bügeln zu positionieren, die auf wenigstens einem Ausnehme-Förderer (20) angebracht sind; diese druckausübenden Mittel (14) sind in der Nähe einer Stelle vorgesehen, an der die Geflügelkadaver von den Sektorgliedern (7) zu einem oder mehreren Bügeln (13) auf mindestens einem Ausnehme-Förderer (20) übergeben werden.

- FIG. 1 -

- FIG. 2 -

EP 0 235 106 B1

- FIG. 5 -

- FIG. 3 -

- FIG. 4 -

8